# EUROPEAN PATENT SPECIFICATION

(11) **EP 4 075 977 B1**
(45) Date of publication and mention of the grant of the patent: **07.02.2024**
(21) Application number: 20833813.7
(22) Date of filing: 17.12.2020
(51) Int. Cl.: A01N 43/08, A01P 5/00

(54) **USE OF DEHYDROASCORBIC ACID AGAINST NEMATODE INFECTION IN PLANTS**
VERWENDUNG VON DEHYDROASCORBINSÄURE GEGEN NEMATODENINFEKTION IN PFLANZEN
UTILISATION DE L'ACIDE DÉHYDROASCORBIQUE CONTRE L'INFECTION DES PLANTES PAR DES NÉMATODES

(30) Priority: 20.12.2019 EP 19218568
(43) Date of publication of application: 26.10.2022
(73) Proprietor: Universiteit Gent, 9000 Gent (BE)
(72) Inventor: KYNDT, Tina, 9000 Gent (BE); SINGH, Richard, Raj, Viti-Levu Island (FJ)
(86) International application number: PCT/EP2020/086690
(87) International publication number: WO 2021/122933

(56) References cited:
- EP-A1- 2 875 730
- WO-A1-92/09202
- AYAKA FUJIWARA ET AL: "Exogenous ascorbic acid derivatives and dehydroascorbic acid are effective antiviral agents against Turnip mosaic virus in Brassica rapa", JOURNAL OF GENERAL PLANT PATHOLOGY, vol. 79, no. 3, 10 March 2013 (2013-03-10) , pages 198-204, XP055693758, JP ISSN: 1345-2630, DOI: 10.1007/s10327-013-0439-5 cited in the application
- COSTANTINO PACIOLLA ET AL: "Short- and Long-Term Effects of Dehydroascorbate in Lupinus albus and Allium cepa Roots", PLANT AND CELL PHYSIOLOGY, vol. 42, no. 8, 15 August 2001 (2001-08-15), pages 857-863, XP055694056, UK ISSN: 0032-0781, DOI: 10.1093/pcp/pce113
- YEW LEE ET AL: "The effect of ascorbic acid and dehydroascorbic acid on the root gravitropic response in", PLANT PHYSIOLOGY AND BIOCHEMISTRY, GAUTHIER-VILLARS, PARIS, FR, vol. 49, no. 8, 31 May 2011 (2011-05-31), pages 909-916, XP028244926, ISSN: 0981-9428, DOI: 10.1016/J.PLAPHY.2011.05.013 [retrieved on 2011-06-12]

## Description

### Field of the invention

The present invention relates to the use of dehydroascorbic acid (DHA) for protecting plants against pathogens, in particular against infection with nematodes. The invention also provides compositions comprising the same, methods of making the same, and methods of controlling plant disease.

### Background of the invention

The agricultural industry is under constant pressure to efficiently enhance food production in order to cope with ever increasing food demands. The only durable way to meet up with that demand is through increasing agricultural productivity from the same - or ideally even reduced - acreages of arable land. It has been estimated that 80% of all crop problems start with root problems and healthy development of plant roots is the key to improve crop yield (Root Health - the key to improving yield; White paper, 2011). Stronger, healthier roots are better suited for uptake of water and nutrients, two of the most critical resources. More robust root systems help to produce stronger stems and foliage that can better withstand environmental stress, especially in challenging climates, and ultimately lead to improved yield consistency (EIP-Agri focus group report, 2015). Plants are subject to multiple belowground disease-causing agents, including abiotic stress such as drought and biotic stress such as e.g. plant-pathogenic nematodes, which are responsible for significant economic losses in agriculture.

Sugar beet (*Beta vulgaris* L.) is the primary source of sugar in the temperate zone and it accounts for 20% of the world's total sugar production. According to the European Commission the EU is the world's leading beet sugar producer with 16.84 million tonnes of sugar production in year 2016/2017, however it exports around 8% of its sugar production. Below ground plant parasitic nematodes cause significant damage to sugar beet production. Generally, crop losses caused by plant-parasitic nematodes are worth of at least 80 billion dollars per year globally. *Heterodera schachtii* (beet cyst nematode (BCN)) is responsible for 90% of all nematode-related sugar beet infestations worldwide. BCN are sedentary endoparasites feeding within the roots of their host (Moens *et al.*, 2018). Cyst nematodes have the ability to survive in the soil for many years in the absence of a suitable host plant (Perry *et al.*, 2018). The presence of root exudates provides a cue for eggs inside the cysts, causing second-stage juveniles (J2) to hatch and invade the roots of the host plant (Moens *et al.,* 2018). The infective J2 stage invades plants primarily in the elongation zone above the root tips (Wyss and Grundler, 1992). Upon invasion, the J2 migrates further into the cortex where it initiates a feeding structure (syncytium) in the root vascular tissue (Sobczak and Golinowski, 2009).

Rice has been cultivated as a staple crop for many years, and sustains approximately half of the world's population. Yield losses in rice because of nematodes have been estimated to range between 10 and 25% worldwide (Kyndt *et al.,* 2014). *Meloidogyne graminicola* or the rice root-knot nematode (RKN) is one of the most prevalent nematodes in various rice growing agrosystems. The infective second stage juveniles (J2s) of *M. graminicola* enter the root in the elongation zone and move intercellular until they reach the vascular cylinder where they induce the formation of feeding sites containing 5-8 giant cells, leading to root galls, preferentially at the root tips (Kyndt *et al.,* 2014). Once the giant cells are established, the nematodes become sedentary, start feeding, and molt three times to reach the adult stage.

Upon pathogen attack, the plant innate immune system responds with a series of local and systemic defence mechanisms (Dhankher *et al.,* 2018; Jones and Dangl, 2006). The plant immune system can be activated externally, for example by pathogens, or applying hormone analogues (systemic acquired resistance, dependent on salicylate (SA)) or by chemicals or beneficial micro-organisms (induced systemic resistance, ISR).

Previously, it has been shown that root application of β-aminobutyric acid (BABA) (Jisha and Puthur, 2016), thiamine (Huang *et al.,* 2016) or silicon (Zhan *et al.*, 2018) enhances the rice plant defence system, leading to improved tolerance or resistance against root parasitic nematodes. Systemic defence activation has also been observed: foliar application of methyl jasmonate (MeJA), ethephon, SA-analogue BTH, or COS-OGA (Fytosave^{®}, a mixture of chitosan oligomers (COS) and pectin-derived oligogalacturonides (OGA)) can activate root defence pathways with varying efficacy (Nahar *et al.,* 2011; Singh *et al.,* 2019).

Several studies show a negative correlation between the amount of ascorbic acid (AA) and resistance to aboveground pathogens. Pavet *et al.*, (2005) showed that Arabidopsis *vtc* (vitamin C)-mutants exhibit enhanced basal resistance against *Pseudomonas syringae*, accompanied by increased cell death activation. However, there are also reports on the role of ascorbic acid in defence against pathogens. *Brassica rapa* cultivars with naturally high amounts of AA showed enhanced resistance to Turnip Mosaic Virus, while *vtc1* plants are more susceptible than wild-type lines (Fujiwara *et al.,* 2016). Furthermore, Fujiwara et al., 2013, reports an antiviral effect of DHA applied to *Brassica rapa* plants. Also, effects of L-ascorbic acid on plant root elongation in non-infected conditions have been described in literature (e.g. Li et al., 2018; Kka et al., 2018).

It is disclosed in WO 92/09202 that 2R,5R-dihydroxymethyl-3R,4R-dihydroxypyrrolidine can be used for controlling plant parasitic nematodes by foliar or soil treatment.

EP 2 875 730 shows the use of dehydroascorbic acid, esters or glycosides thereof for providing plants with stress resistance.

Paciolla et al. (Plant Cell Phys. 2001, 42, 857-863) and Lee et al. (Plant Phys. Biochem. 2011, 49, 909-916) have shown a negative influence on root growth resulting from treatment of plants with dehydroascorbic acid.

In the present invention it was demonstrated that the application of dehydroascorbic acid (DHA) improves general plant tolerance to belowground infection by parasitic nematodes. Moreover it was shown that application of DHA has a positive effect on plant root elongation in infected plants.

### Summary of the invention

The present invention provides the use of dehydroascorbic acid (DHA), or a stereoisomer, tautomer, hydrate, salt, ester, solvate, complex and/or functional analog thereof, for controlling nematode infections in plants and/or for promoting root growth in (nematode-)infected plants. The use of DHA was demonstrated to be effective against root parasitic nematodes, in particular root-knot nematodes and/or cyst-nematodes. Application of exogenous DHA or compound provided herein can be to the leaves of the plant, as a seed coating or as a soil drench. In one embodiment the present invention encompasses a spraying formulation comprising DHA or a compound of the invention.

A particular advantage is that a compound of Formula I or II, more specific DHA, can be applied to the plant as a pre-emptive measure or as a priming agent, i.e. before infection or visible damage/signs of infection. In a particular embodiment, the invention provides the use of DHA, or a stereoisomer, tautomer, hydrate, salt, ester, solvate, complex and/or functional analog thereof, for stimulating the immune defence of a plant against nematode infection, in particular against root-parasitic nematodes.

### Brief description of the figures

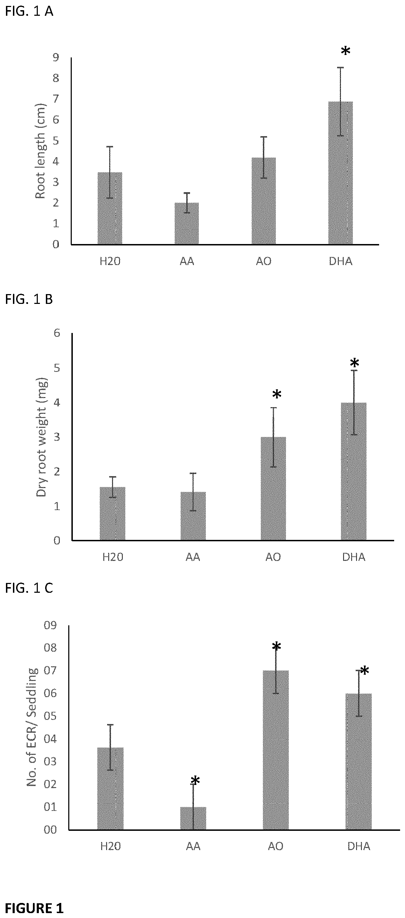

**Figure 1****. Effect of DHA on root development of rice seedlings.** 3-days old rice seedlings were drenched with 1mL of AA (20 mM), AO (20 U/mL), DHA (20 mM) or water (H₂O) as a negative control. Rice root length (A) and dry root weight (B) and the number of embryonic crown roots (ECR; C) were measured 5 days after drenching. Bars represent means and standard deviation of 8 individual plants for each treatment group. Asterisks indicate statistically significant differences in comparison with the water-treated control plants (Students t-test α = 0.05).

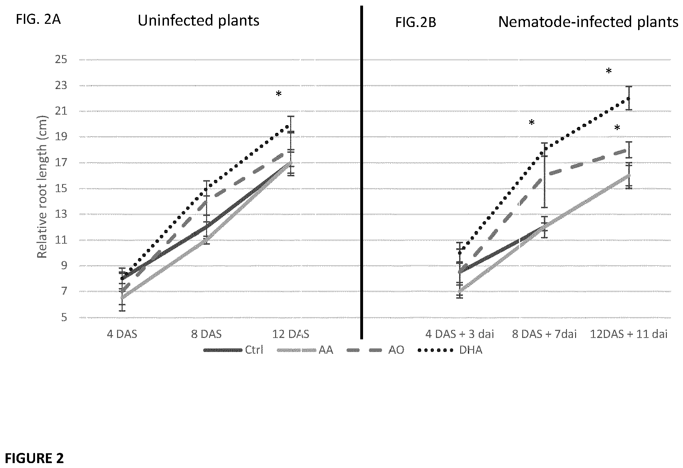

**Figure 2****. Effect of DHA on root growth in rice under uninfected and nematode-infected conditions.** 14-days old rice plants were foliarly sprayed with AA (20 mM), AO (20 U/mL), DHA (20 mM) or water (H₂O) as a negative control (Ctrl). One day later, half of the plants were inoculated with 250 nematodes per plant. (A) Evaluation of root length was done at 4, 8 and 12 days after spraying (DAS), which corresponds to 3, 7 and 11 days after inoculation (dai) in case of nematode-infected plants. Each point shows the mean and standard error of 8 individual plants for each treatment group. Asterisks indicate statistically significant differences (Students t-test α = 0.05) in comparison with the water control at the same time point.

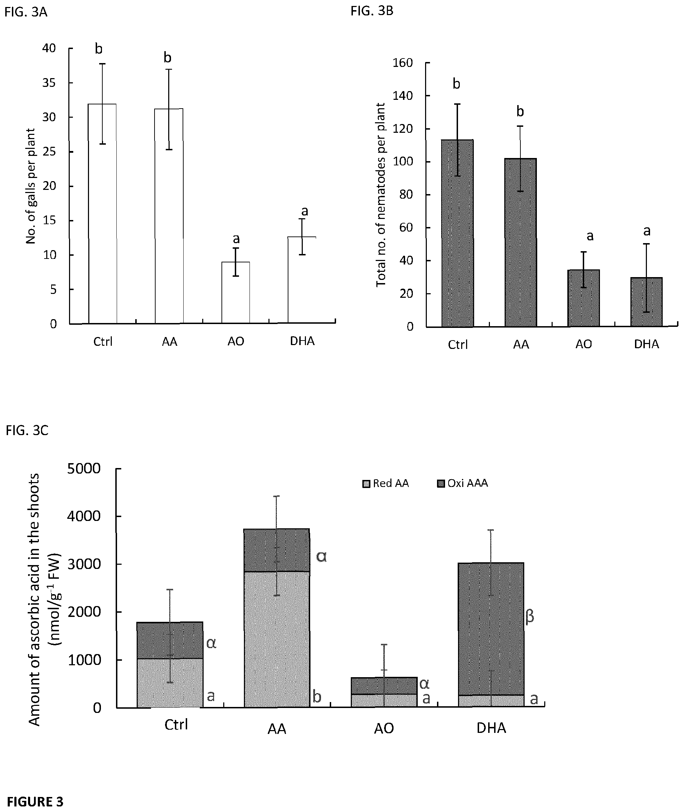

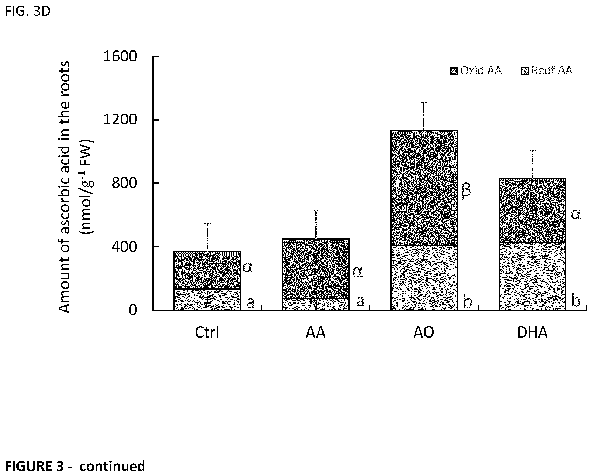

**Figure 3****. Effect of foliar DHA application on rice root defence to root-knot nematode *M. graminicola.*** Susceptibility assay on rice plants foliarly sprayed with AA (20 mM), AO (20 U/mL), DHA (20 mM) or water as a negative control (Ctrl). Fifteen-day-old plants were inoculated with 250-300 nematodes. 24 hours before the inoculation, plants were sprayed with respective chemicals. The number of galls per plant (A) and number of nematodes per plant (B) was counted at 12 dai. Bars represent means and standard error of 8 plants. Different letters indicate statistically significant differences (Duncan; α = 0.05). Data represent one of three independent experiments with similar results. AO, ascorbate oxidase; DHA, dehydroascorbate, AA ascorbic acid. Levels of reduced ascorbic acid and DHA in the shoots (C) and in roots (D) of AA, AO or DHA foliar sprayed plants. Two week old plants were sprayed with chemicals and samples were collected 24 h later. A total of 4 biological and three technical replicates were used per sample. Bars represent mean values±standard error (n=4). Post-hoc multiple comparison was conducted with Duncan (α = 0.05). Different letters indicate statistically significant differences. AA, Ascorbic acid; AO, ascorbate oxidase; DHA, Dehydroascorbic acid.

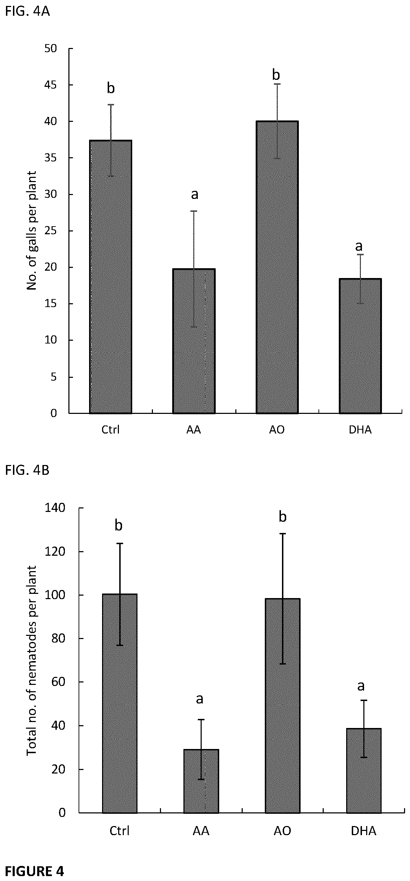

**Figure 4****. Effect of soil DHA treatment on rice root defence to root-knot nematode *Meloidogyne graminicola.***
   Susceptibility assay on rice plants soil drenched with AA (20 mM), AO (20 U/mL), DHA (20 mM) or water as a negative control. Fifteen-day-old plants were inoculated with 250-300 nematodes. 24 hours before the inoculation, plants were soil drenched with respective chemicals. The number of galls per plant (A) and number of nematodes per plant (B) was counted at 12 days after inoculation. Bars represent means and standard deviation of 8 plants. Different letters indicate statistically significant differences (Duncan; α = 0.05). Data represent one of three independent experiments with similar results. AO, ascorbate oxidase; DHA, dehydroascorbate, AA ascorbic acid.

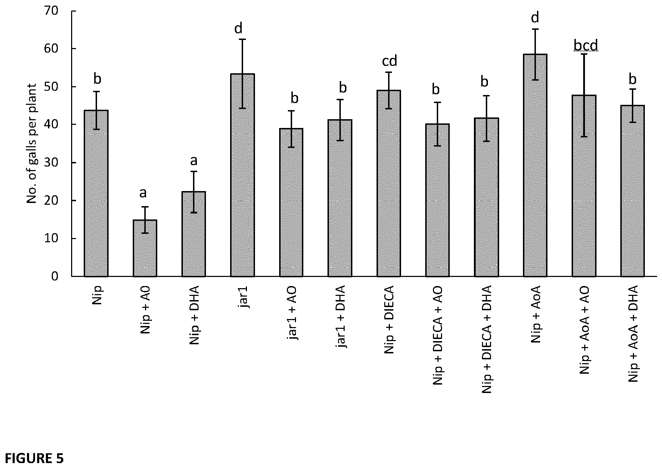

**Figure 5****. Ascorbate oxidation induced defence against root-knot nematodes is dependent on JA and ET biosynthesis.**
   Wild type Nipponbare (Nip), and JA signaling mutant jar1 were sprayed with water, AO (20 U/mL), DHA (20 mM), and DIECA (JA biosynthesis inhibitor, 100 µM) or AoA (ET biosynthesis inhibitor, 12.5 mM) either alone or in combination with AO (20 U/mL) or DHA (20 mM). Plant roots were inoculated with 300 M. *graminicola* juveniles at 24 hours after spraying with respective chemicals. Bars represent means ± standard error of the number of galls of 8 plants at 12 days after inoculation. Different letters indicate statistically significant differences (Duncan's multiple range test with α = 0.05). MeJA, methyl jasmonate; AO, ascorbate oxidase; DHA, dehydroascorbate; AoA, aminooxyacetic acid; DIECA, diethyldithiocarbamic acid.

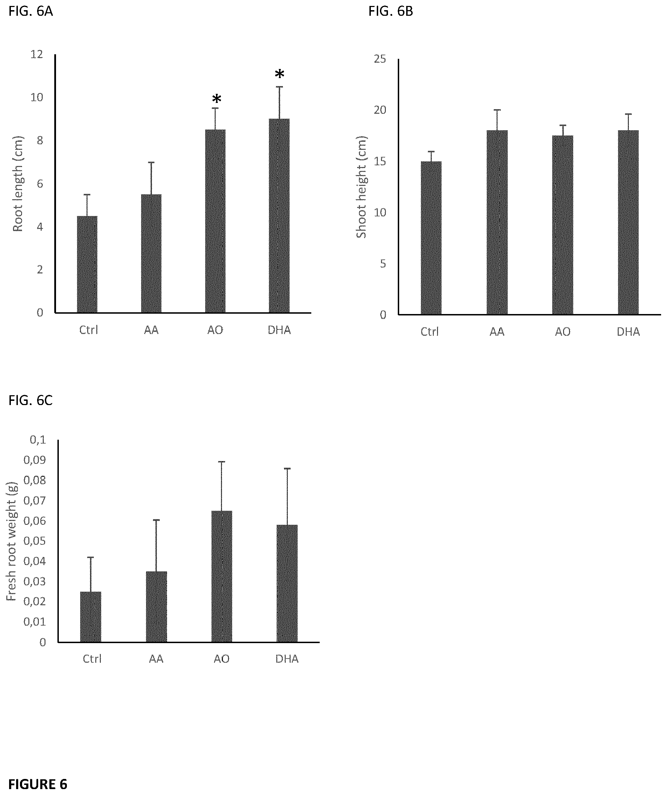

**Figure 6****. Effect of DHA on root and shoot growth in sugar beet plants.** Evaluation of sugar beet root length (A) shoot height (B) and fresh root weight (C) was done on sugar beet plants foliarly sprayed with AA (20 mM), AO (20 U/mL), DHA (20 mM) or water (H₂O) as a negative control (Ctrl). Spraying was done on 2-weeks old plants, and measurements were done 1 week later. Bars represent means and standard deviation of 8 individual plants for each treatment group. Asterisks indicate statistically significant differences (Student's T-test; α = 0.05) in comparison with the water control.

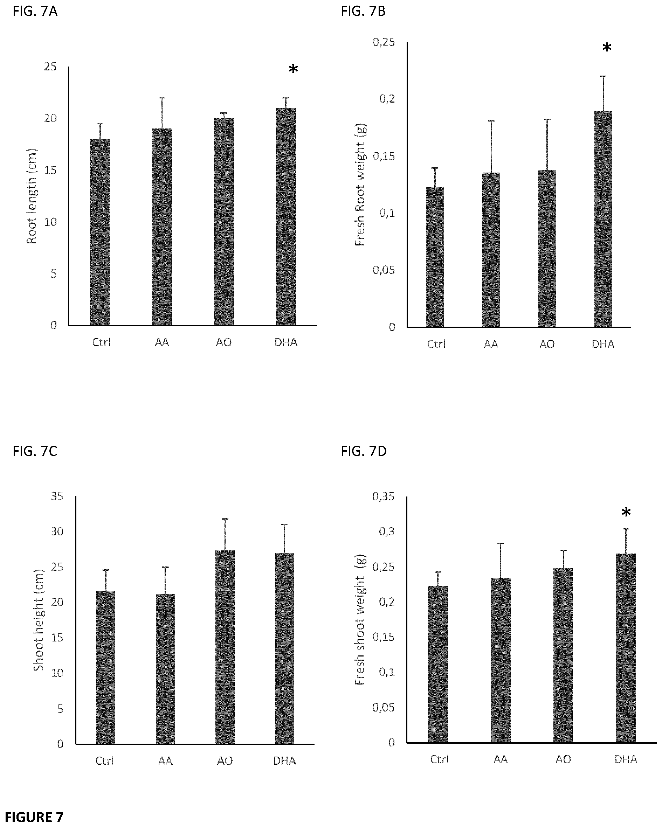

**Figure 7****. Effect of DHA on root and shoot growth in sugar beet under cyst nematode-infected conditions at early time point.** 21-days old sugar beet plants were foliarly sprayed with AA (20 mM), AO (20 U/mL), DHA (20 mM) or water (H₂O) as a negative control. One day later the plants were inoculated with 250 *Heterodera schachtii* nematodes per plant. Evaluation of root length (A), fresh root weight (B), shoot height (C) and fresh shoot weight (D) was done at 4 after spraying (DAS), which corresponds to 3 days after inoculation (dai). Each bar shows the mean and standard deviation of 8 individual plants for each treatment group. Asterisks indicate statistically significant differences (Student's T-test; α = 0.05) in comparison with the water control. AO, ascorbate oxidase; DHA, dehydroascorbate, AA ascorbic acid.

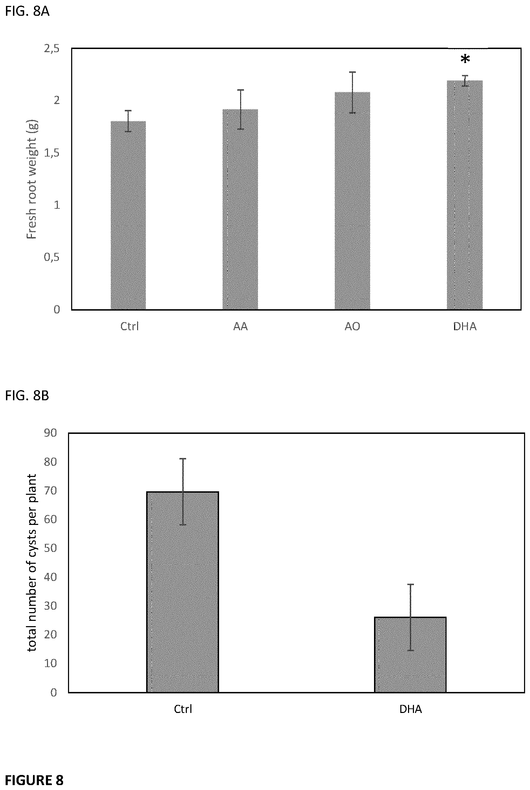

**Figure 8****. Effect of DHA on fresh root weight (A) and number of cysts (B) in sugar beet under cyst nematode-infected conditions at later time point.** 21-days old sugar beet plants were foliarly sprayed with AA (20 mM), AO (20 U/mL), DHA (20 mM) or water as a negative control (Ctrl). One day later the plants were inoculated with 250 *Heterodera schachtii* nematodes per plant. Evaluation was done at 43 days after spraying (DAS), which corresponds to 42 days after inoculation (dai). Each bar shows the mean and standard deviation of 8 individual plants for each treatment group. Asterisks indicate statistically significant differences (Student's T-test; α = 0.05) in comparison with the water control. AO, ascorbate oxidase; DHA, dehydroascorbate, AA ascorbic acid.

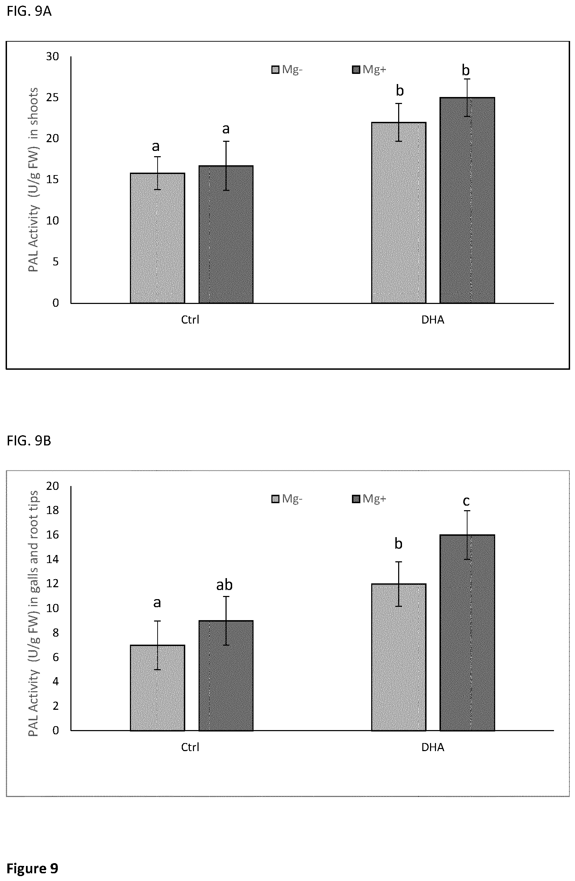

**Figure 9****: Phenylalanine ammonia lyase (PAL) activity in (A) shoots and (B) galls and uninfected root tips of 20 mM DHA or mock-treated (Ctrl) plants at 3 days after inoculation.** Plants were either uninfected (Mg-) or inoculated with nematodes (Mg+). 14 days old rice plants were sprayed and 1 day later, plants were inoculated with *Meloidogyne graminicola* nematodes or mock inoculated. Three days after inoculation, samples were collected for measurement. Error bars indicate the standard deviation of 4 biological replicates containing a pool of 4 plants. Different letters indicate statistically significant differences (Duncan; α = 0.05). DHA, dehydroascorbate

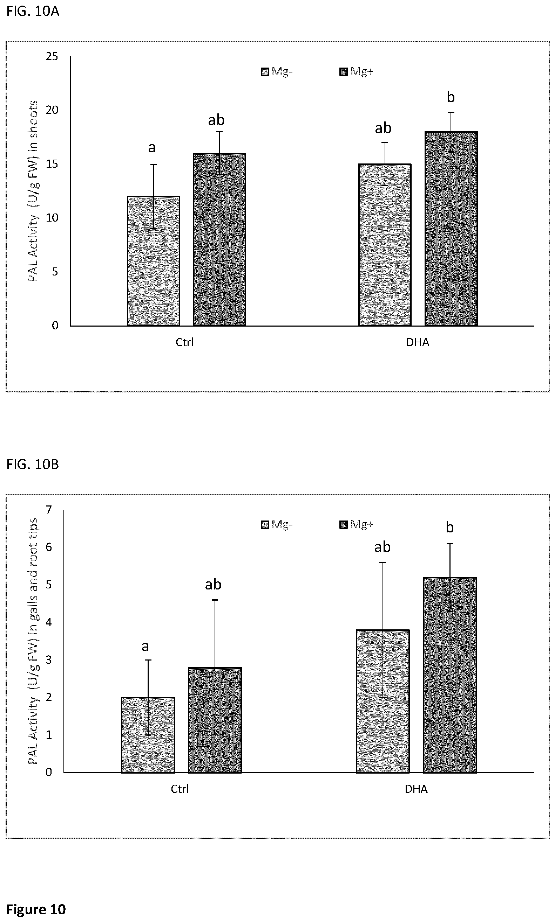

**Figure 10****: Phenylalanine ammonia lyase (PAL) activity in (A) shoots and (B) galls and uninfected root tips of 20 mM DHA or mock-treated (Ctrl) plants at 7 days after inoculation.** Plants were either uninfected (Mg-) or inoculated with nematodes (Mg+). 14 days old rice plants were sprayed and 1 day later, plants were inoculated with *Meloidogyne graminicola* nematodes or mock inoculated. Seven days after inoculation, samples were collected for measurement. Error bars indicate the standard deviation of 4 biological replicates containing a pool of 4 plants. Different letters indicate statistically significant differences (Duncan; α = 0.05).DHA, dehydroascorbate

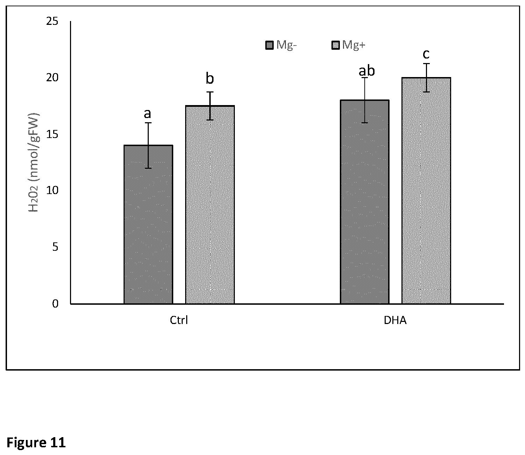

**Figure 11****. H₂O₂ levels in the roots of 20 mM DHA treated plants versus water-treated control (Ctrl) plants, measured at 1 day after Mg inoculation (Mg+) or mock-inoculation (Mg-).** 14 days old rice plants were sprayed and 1 day later, plants were inoculated with *Meloidogyne graminicola* nematodes or mock inoculated. One day after inoculation, roots were collected for measurement. Measurements were done using the xylenol orange method. Error bars indicate the standard deviation of 3 biological replicates containing a pool of 4 plants. Different letters indicate statistically significant differences (Duncan; α = 0.05). DHA, dehydroascorbate

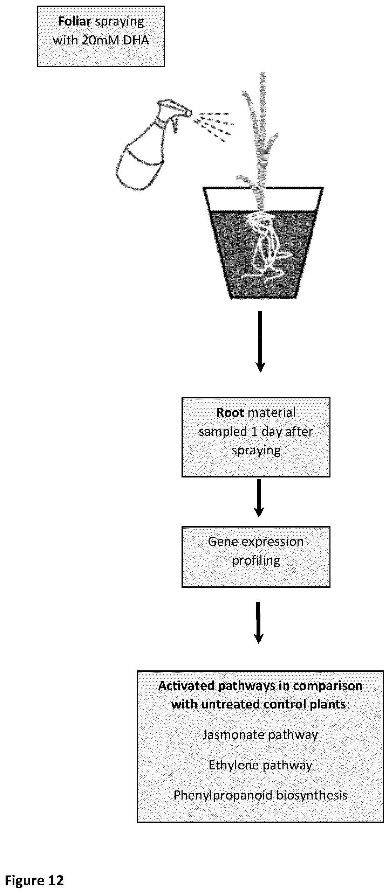

**Figure 12****.** Scheme for examining systemic gene expression by RNA-sequencing on DHA-treated plants. DHA, dehydroascorbate

### Description of the invention

As used herein, the singular forms "a", "an", and "the" include both singular and plural referents unless the context clearly dictates otherwise. The terms "comprising", "comprises" and "comprised of" as used herein are synonymous with "including", "includes" or "containing", "contains", and are inclusive or open-ended and do not exclude additional, non-recited members, elements or method steps. The term "about" as used herein when referring to a measurable value such as a parameter, an amount, a temporal duration, and the like, is meant to encompass variations of +/-20% or less, preferably +1-10% or less, more preferably +/-5% or less, of and from the specified value, insofar such variations are appropriate to perform in the disclosed invention. It is to be understood that the value to which the modifier "about" refers is itself also specifically, and preferably, disclosed. Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any >3, >4, >5, >6 or >7 etc. of said members, and up to all said members. All references, and teachings specifically referred to, cited in the present specification are hereby incorporated by reference in their entirety. Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous. Reference throughout this specification to "one embodiment" or "an embodiment" means that a particular feature, structure or characteristic described in connection with the embodiment is included in at least one embodiment of the present invention.

The present invention relates to a use of a compound of formula II for protecting plants against infection with nematodes as defined in claim 1. More specific, the present specification describes the reduction or prevention of root damage by or due to nematode infections in plants, such effect being achieved by applying dehydroascorbic acid (DHA), or a stereoisomer, tautomer, hydrate, salt, ester, solvate, and/or complex thereof, to said plant. Moreover, it was demonstrated that the application of DHA to healthy as well as (nematode-) infected plants results in enhanced root growth (e.g. longer and more roots when compared to control plants). It was furthermore shown that increase or accumulation of DHA inside roots of plants results in tolerance against nematode infection and promotes root growth. Hence the specification describes a method to control nematode infections in a plant and/or to stimulate root development in a plant by applying a compound as defined in claims 1 or 13, in particular dehydroascorbic acid (DHA), to the plant, thereby inducing accumulation of DHA in the roots of said plant.

Dehydroascorbic acid (DHA) (CsHsOs; IUPAC (5R)-5-[(1S)-1,2-dihydroxyethyl]furan-2,3,4(5H)-trione) is an oxidized form of ascorbic acid (vitamin C), having the following structural formula:

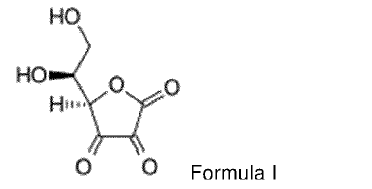

The present invention provides uses of DHA as presented in Formula I, or a stereoisomer, tautomer, hydrate, ester, solvate, and/or complex thereof.

Accordingly the present invention provides uses of a compound of the Formula II, or a stereoisomer, tautomer, hydrate, salt, ester, solvate, and/or complex thereof, wherein the compound of Formula II is: 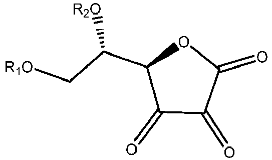
wherein R1 and R2 each independently represents a hydrogen atom, -SO3H, -PO3H2, a glycosyl group,
or -COX wherein X represents an unsubstituted or substituted C1 to C30 alkyl group or an unsubstituted or substituted C2 to C30 alkenyl group. In one embodiment R2 represents xylose. More specific, at least one of R1 and R2 represents -COX, wherein X represents an unsubstituted or substituted C1 to C30 alkyl group or an unsubstituted or substituted C2 to C30 alkenyl group. The glycosyl group is a sugar residue such as a monosaccharide e.g. glucose, galactose, fructose, rhamnose;
or a low molecular weight oligosaccharide, e.g. rutinose, vicianose, lactose, maltose, sucrose.

The number of substituents in the alkyl or alkenyl groups may be 1, or may be 2 or more. Two or more substituents may be the same, or may be different. Examples of groups which can be a "substituent" in the C1 to C30 alkyl group or the C2 to C30 alkenyl group include a hydroxyl group; a mercapto group; an amino group; a nitro group; a halogen atom; an alkoxy group; an aryloxy group; a haloalkoxy group; an alkylthio group; an alkylamino group; an arylamino group; a cyano group.

A "C1 to C30 alkyl group" in X is a saturated hydrocarbon group comprising 1 to 30 carbon atoms. A C1 to C30 alkyl group may be a linear chain, or may be a branched chain. Examples include methyl, ethyl, n-propyl, etc. A "C2 to C30 alkenyl group" in X is an unsaturated hydrocarbon group comprising 2 to 30 carbon atoms having at least one carbon-carbon double bond. A C2 to C30 alkenyl group may be a linear chain, or may be a branched chain. Examples include propenyl, allyl, butenyl, pentenyl, etc.

Suitable agrochemical acceptable salts may include alkali metal salts, e.g. sodium or potassium salts; alkaline earth metal salts, e.g. calcium or magnesium salts; and salts formed with suitable organic ligands, e.g. quaternary ammonium salts. A salt can be any ionic compound that can be formed by the neutralization reaction of an acidic compound and a base. Examples include, but or not limited to, an ammonium, a potassium or isopropylamine salt. In another embodiment, base salts are formed from bases which form non-toxic salts, including aluminum, arginine, benzathine, choline, diethylamine, diolamine, glycine, lysine, meglumine, olamine, tromethamine and zinc salts. In one embodiment, hemisalts of acids and bases may also be formed, for example, hemisulphate and hemicalcium salts. In a particular embodiment, the invention also encompasses esters derived from the compounds of the invention. Said esters can be of particular interest for a foliar application in view of enhanced penetration properties.

In one embodiment, the invention provides the use of L- dehydroascorbic acid (CAS Number 490-83-5).

In a further embodiment, the compound of Formula I or II, in particular DHA, is used to control nematode infections in plants. More specific, the compound of the invention is used to improve tolerance of plants or crops to nematodes, in particular root nematodes. The present invention demonstrates that exogeneous application of the compound, in particular DHA, to a plant protects plants against infection with nematodes, and more specific inhibits the penetration of plant parasitic nematodes (resulting in reduced numbers of nematodes on the plants), improves root growth and development under infected conditions and/or reduces number of feeding sites such as e.g. the production of galls or syncytia by such nematodes. Hence, the compounds of the invention can be used as a "plant stimulator",i.e. a compound increasing the immune defence of a plant and stimulating root growth.

The terms "controlling nematodes" or "protecting against nematode infection" refers to reducing the overall negative effect of plant pathogenic nematodes on plants such that the plants experience a decreased amount of negative effects by said nematodes as compared to plants not treated with the compound, in particular DHA. The overall negative effect by plant pathogenic nematodes may be reduced, such as by reducing the overall number or density of plant parasitic nematodes (i.e., decrease in nematode population) on the plant or by reducing the severity or extent of negative effects of the nematodes (e.g. number of lesions, spots, wilting, gall formation, rot, seedling death, growth reduction, yield losses, etc.). Of particular advantage is that the compound, in particular DHA, stimulates the systemic immune defence of the plant and can be used pre-emptively or preventive as a priming agent (e.g. to seedlings or non-infected plants), as well as curative and require only a simple formulation. The use as a priming agent will delay, or even prevent, the damage to the plant when becoming infected.

As used herein, the term "nematode" refers to multicellular animals in the phylum Nematoda. "Plant parasitic nematode" refers to nematode parasites of plants which can be found in/on plant roots, seeds, flowers, leaves, stems, or the soil in which the plant is growing. Plant parasitic nematodes feed on all parts of the plant, including roots, stems, leaves, flowers and seeds and include microorganisms from the genera Meloidogyne, Heterodera, Globodera, Pratylenchus, Aphelenchoides, Xiphinema, Radopholus, Bursaphelenchus, Rotylenchulus, Nacobbus, Longidorus, Ditylenchus and Trichodorus. In one embodiment, the parasitic nematodes are from the genera Meloidogyne, Heterodera and Pratylenchus.

"Cyst nematodes" (genera Heterodera and Globodera) and "root-knot nematodes" (genus Meloidogyne), in particular, cause significant economic loss in plants, especially crop plants. Examples of cyst nematodes include, H. schachtii (sugar beet cyst nematode), H. avenae (cereal cyst nematodes), H. glycines (soybean cyst nematode), H. sacchari (sugarcane cyst nematode), H. carotae (carrot cyst nematode), G. pallida (white potato cyst nematode) and G. rostochiensis (yellow potato cyst nematode). Root-knot nematodes include, for example, M. graminicola, M. javanica, M. incognita, M. arenaria, M. chitwoodi, M. artiellia, M. fallax, M. hapla, M. microtyla, M. partityla, M. panyuensis, M. naasi, M. exigua, M. enterolobii and M. paranaensis. These pathogens establish "feeding sites" in the plant, by causing the morphological transformation of plant cells into giant cells or syncytia, which block the flow of nutrients and photosynthesis products. Hence, nematode "infection" refers to invasion of and feeding upon the tissues of the host plant. Other nematodes that cause significant damage include the "root-lesion" nematodes such as Pratylenchus, particularly P. penetrans, which infects maize, rice and vegetables, P. brachyurus which infects pineapple, P. zeae, which infects cereals, sugarcande and coffee, P. coffeae, which infects coffee and banana, and P. thornei, which infects wheat.

In a further embodiment, the invention provides the use of a compound of Formula I or II, more specific DHA, or a stereoisomer, tautomer, hydrate, salt, ester, solvate, and/or complex thereof, for controlling infection of a plant with a root-knot nematode selected from the group consisting of: M. graminicola, M. javanica, M. incognita, M. arenaria, M. chitwoodi, M. artiellia, M. fallax, M. hapla, M. microtyla, M. partityla, M. panyuensis, M. naasi, M. exigua, M. enterolobii and M. paranaensis, in particular M. graminicola.

In another embodiment, the invention provides the use of a compound of Formula I or II, more specific DHA, or a stereoisomer, tautomer, hydrate, salt, ester, solvate, and/or complex thereof, for controlling infection of a plant with a cyst nematode selected from the group consisting of H. schachtii, H. avenae, H. glycines, H. sacchari, H. carotae, G. pallida and G. rostochiensis, in particular H. schachtii.

The present specification describes a composition or formulation comprising the compound of formula II as provided herein and a diluent, an additive, a plant (micro) nutrient, an emulsion stabilizer, a surfactant, a buffer, a crop oil, a drift inhibitor and/or an (inert) substratum, in particular water and/or a surfactant. In particular, the composition is a foliar spray, root drench or a seed coating. Furthermore, the compound used in the invention, or a composition comprising it can further include or be used in combination with one or more fertilizers, biostimulants, herbicides, fungicides, bactericides, acaricides, nematicides and/or insecticides. In particular the composition is an agrochemical composition comprising DHA as provided herein, and at least one excipient, in particular an agriculturally and/or horticulturally acceptable excipient. The term "agriculturally and/or horticulturally acceptable" indicates that the formulation is non-toxic and otherwise acceptable for application to a plant, whether applied indoors (e.g. in a contained environment) or outdoors (e.g. in a non-contained environment that is exposed to other plant, animal and human life).

The compounds of Formula I or II, or as provided herein, can be isolated (e.g. in substantially purified form) or synthetically made using standard techniques, or commercially available. In particular, the compound is not part of a natural extract made by extracting a part of a raw material, often by using a solvent such as ethanol or water (e.g. aqueous or ethanolic extracts of seeds or plants; oils). More in particular, the compound, in particular DHA (e.g. as part of a composition) is employed in a purity of from 90% to 100%, preferably from 95% to 100% (according to their NMR spectrum).

Examples of suitable excipients are Tween^{®} 20 (comprising polyoxyethylene (20) and sorbitan monolaurate (polysorbate 20)), castor oil ethoxylate, rapeseed methyl ester, alkyl phosphates, tributyl phosphate, tripropyl phosphate, naphthalene sulphonic acid salts, organic sulfonate/2-methylpentane-2,4-diol, alkylpolyglucoside, siloxanes derivates, alkylsulfonates, polycarboxylates, lignosulfonates, alkoxylated triglycerides, fatty amines polymers, and dioctylsulfosuccinates.

The composition or formulation will typically contain effective amounts of a compound as described herein. An "effective amount" means that it is used in a quantity which allows to obtain the desired effect but which does not give rise to any significant phytotoxic symptom on the treated plant. In one embodiment, the concentration of the compound (e.g. DHA) administered on or to the plant ranges from 0,5 to 1000mM, from 1 to 500 mM, in particular from 1 to 200mM, more in particular from about 5 to about 150 mM, even more in particular from about 10 to about 100 mM.

Any plant/crop can be treated. The term "plant (or plants)" is a synonym of the term "crop" which is to be understood as a plant of economic importance and/or a men-grown plant. The methods, compounds and compositions of the present invention may be applied to any monocot or dicot plant or a tree. In one embodiment, the treated plant belongs to the amaranth family (Amaranthaceae), e.g. sugar beet (Beta vulgaris) or spinach (Spinacia oleracea). In another embodiment, the treated plant is a monocot plant, in particular a grass, more in particular a cereal grass such as rice. Rice is a monocot and includes the genera Oryza, Zizania and Porteresia.

According to the use of the present invention, a compound of the invention, or a composition comprising it is applied to a plant, directly or indirectly. Any appropriate plant part can be treated or used including plant organs (e.g., leaves, stems, roots, etc.), seeds, and plant cells and progeny of the same. In the alternative, the compound or a composition can be applied to the soil or substrate surrounding the plant, however with direct contact with the roots. The applying of the compound is prior to planting, at planting, or after planting. In one embodiment, contacting includes direct application to a plant. All or part of a plant including, without limitation, leaves, stems, roots, propagules (e.g., cuttings), fruit, seeds etc., may be contacted with the compound as provided herein. Contacting may also be carried out indirectly, via application, e.g., to soil or other plant substrates but making uptake by the plant possible.

Preferred application methods are foliar treatment (e.g. by spraying), seed treatment (e.g. by seed coating) or soil treatment (e.g. by soil drenching), and in particular foliar treatment. Plant parts to be treated can be a seed, fruit, fruit body, leaf, stem, shoot, stalk, flower, root, tuber or rhizome, in particular leaves.

Suitable application methods include high or low-pressure spraying, immersion, atomizing, foaming, fogging, coating, and encrusting. Other suitable application procedures can be envisioned by those skilled in the art. In a particular embodiment, the compound of the invention is applied to the parts of the plant above ground or to the foliage of the plant by spraying e.g. by the use of mechanical sprayers. Sprayers convert a formulation of the invention which is mixed with a liquid carrier, such as water or fertilizer, into droplets. The droplets can be any size. Boom sprayers and air blast sprayers can also be used to apply formulations of the invention to pre-emerging or post-emerging crops. Air blast sprayers inject formulations of the invention mixed with a liquid carrier into a fast-moving air stream. Where the formulations of the invention are in a solid, powder or granule form, they can be applied with granule or dust application equipment.

In another embodiment, seeds of a plant are coated with a compound as provided herein ("coated seeds").

Any appropriate seed coating method known the skilled person can be used.

In another aspect, the compound used in the invention, or a composition comprising it can be applied to the substrate of the plant (e.g. in hydroponics) or to the soil directly, e.g. by drip irrigation or drench application (soil drench). A soil drench applies the compound, such as DHA, optionally mixed with water, to the soil around the base of a plant so that its roots can absorb the extract.

According to the use of the present invention, the compound of formula II or the composition comprising such compound can be applied once to a plant (part)/crop, or it can be applied two or more times after each other with an interval between every two applications as can be determined by the person skilled in the art.

### Examples

### Materials & Methods

### Plant material and growth conditions

*Rice* - Seeds of wild-type rice *Oryza sativa* cv. Nipponbare were obtained from USDA (GSOR-100). Seeds were germinated on wet filter paper for 4-5 days at 30°C and seedlings were then transferred to SAP-substrate (Sand mixed with Absorbent Polymer AquaPerla^{®}, DCM, Belgium) and further grown at 28°C, under a light regime of (day/night) 12/12. Hoagland solution was given as a source of nutrients 3 times a week.

*Sugar beet* - seeds of cv. Amarok were germinated on moist tissue for 4-5 days at 25 °C. For longer experiments seedlings were transplanted to polyvinyl-chloride (PVC) tubes containing fine soil particles. All experiments were conducted in a plant growth room at 25°C, with a 16/ 8 h day/night regime. The plants were fertilized by supplying Hoagland solution as a source of nutrients 3 times a week.

### Nematode extraction, inoculation and analysis of plant susceptibility and tolerance

### Root knot nematode Meloidogyne graminicola

*M. graminicola* originally isolated in the Philippines (Batangas) was cultured on susceptible rice plants. Second stage juveniles (J2s) were extracted using a sieve/tray extraction method and inoculation was done as described in Nahar *et al.,* (2011). For susceptibility assays, at least two independent experiments were carried out, each time including eight plants per treatment. Twelve days after inoculation (dai), roots were stained using acid fuchsine (Nahar *et al.,* 2011) to count galls and number of nematodes in the roots.

### Beet cyst nematode (BCN), Heterodera schachtii

BNC cysts were obtained from Iran and were maintained on sugar beet (cv. Amarok) plants. Cysts were obtained from stock cultures, by washing the infected soil and letting the cysts to float in water. Full cysts with eggs were hand-picked and allowed to dry before setting up for hatching. For second-stage juveniles (J2) to hatch, cysts were placed in 3mM of ZnCl₃ and transferred to an incubator/shaker at a temperature of 25.5 °C at 70 rpm for 4 days (Kammerhofer *et al.,* 2015). J2 were re-suspended in water and counted under a stereomicroscope. Around 250-300 J2 nematodes were inoculated per plant. One day before and after inoculation, plants were not supplied with any nutrients or water. To investigate the plant tolerance to BCN infection root length, shoot height, fresh root weight as well as the number of cysts were measured at different time points after spraying and/or inoculation. For all experiments, 8 individual plants were used per treatment.

### Chemical applications

Reduced Ascorbic acid (AA, 20 mM), dehydroascorbic acid (DHA, 20 mM), ascorbate oxidase (AO, 20 U/ml), methyl jasmonate (MeJA, 100 µM), aminooxyacetic acid (AoA, 12.5 mM), diethyldithiocarbamic acid (DIECA, 100 µM) and ethephon (100 µM) were purchased from Sigma and dissolved in water (except MeJA that was first dissolved in a drop of ETOH) to attain the indicated concentration.

### Evaluation of seedling growth

3-days old rice seedlings were drenched with 1mL of AA (20 mM), AO (20 U/mL), DHA (20 mM) or water (H₂O) as a negative control. Rice root length and dry root weight as well as the number of embryonic crown roots (ECR) were measured 5 days after drenching.

### Foliar application and soil drench

For foliar application, all chemicals were dissolved in water and 0.02% (v/v) of Tween20 as a surfactant was added prior to spraying on aerial portions of the rice plants. Control plants were sprayed with distilled water containing 0.02% Tween20. Eight plants per treatment were sprayed until run-off with 6.5 mL of solution (at 24 h prior to nematode inoculation, in cases where infected plants were used). The substrate was covered to avoid direct contact with the roots and/or nematodes.

For soil application, 6.5 mL of each solution was drenched on the substrate, 24 h prior to nematode inoculation.

### Biochemical analyses

*Ascorbate measurements* - Plant roots were collected from a pool of 5-6 plants per treatment and crushed in liquid nitrogen. In each assay, 100 mg of crushed material was used per sample, and at least 4 biological replicates were analyzed per treatment. Reduced and oxidized AA were measured according to the method described in Ueda *et al.,* 2013. Absorbance was monitored using a microplate reader (TECAN - Infinite200pro).

*H₂O₂ measurements* - 14 days old rice plants were foliar sprayed with 20 mM DHA and 1 day later, plants were inoculated with *Meloidogyne graminicola* nematodes (Mg+) or mock inoculated (Mg-). One day after inoculation, samples were collected. Root samples were flash-frozen and ground under liquid nitrogen. Per sample, 100 mg of material was used to execute the xylenol orange method for H₂O₂ quantification described by Cheeseman (2006). After 5% trichloroacetic acid extraction, and 30 minutes reaction with the ferrous ammonium sulphate/xylenol orange (FOX) reagent, the absorbance was measured at 560 nm. The concentration was calculated by comparison with a standard curve of known H₂O₂ concentrations. The assay was done with 3 biological replicates, which each consisted of pooled material of 4 plants.

*PAL activity measurements* - 14 days old rice plants were foliar sprayed with 20 mM DHA and 1 day later, plants were inoculated with *Meloidogyne graminicola* nematodes (Mg+) or mock inoculated (Mg-). Three or seven days after inoculation, samples were collected. Both galls and systemic tissue (shoots) were collected. Samples were flash-frozen and ground under liquid nitrogen. Per sample, 100 mg of material was used to execute PAL-activity measurement according to Camacho-Cristóbal *et al.* (2002). PAL was assayed by measuring the formation of trans-cinnamic acid at 290 nm. Samples were dissolved in 800 µl of 50 mM sodium phosphate as assay buffer containing 2% (w/v) poly-vinylpolypyrrolidone (PVPP), 2 mM EDTA, 18 mM-mercaptoetanol and 0.1% (v/v) Triton X-100. The homogenate was centrifuged at 8000 rpm, 4°C for 10 min. In different 2 ml tubes, 135 µl of reaction buffer, 50 µl of 5 mM of L-phenlyalanine, and 20 µl of supernatant were mixed and absorbance at 290 nm was measured before incubation at 40°C for 30 minutes. Then, 10 µl of hydrochloric acid was added and measurement was again done at the same wavelength. The assay was done with 4 biological replicates, which each consisted of pooled material of 4 plants.

### Gene expression profiling by RNA-sequencing on root tissue upon foliar application in rice

Fourteen-day-old rice plants were foliar sprayed with 20 mM DHA as described above. Root material from 3 biological replicates of control plants and 3 biological replicates of treated plants were sampled at 1 day after treatment. Each biological replicate consists of at least 4 individual plants that were pooled to minimize inherent biological variability. RNA was extracted using the RNeasy Mini Kit by Qiagen. Quality and concentration of the samples was assessed using NanoDrop 2000. Approximately one microgram of total RNA was used for 3' mRNA-Seq library construction using the QuantSeq 3' mRNA-Seq Library Prep Kit FWD for Illumina (Lexogen). To minimize lane effects the samples were multiplexed, using the multiplexing sequencing adapters provided in the Multiplexing Sample Preparation Oligo Kit (Illumina). Size selection of the library was performed on a 2% agarose gel (Low Range Ultra Agarose, Biorad 161-3107). The denatured library was diluted to a final concentration of 6 pM and loaded on a flow cell (Illumina). After cluster generation, the multiplexed library was sequenced on an Illumina NextSeq500 (75 cycles, single end, high output). Data-analysis was performed using Microsoft Open R (version 3.5.2). The raw data underwent a quality control via the fastqc function. Following the quality control, samples were trimmed (using Trimmomatic (*Trimmomatic Manual: V0.32*) and again their quality was checked. Trimmed data was mapped onto the annotated genome by making use of the STAR-mapper function (Dobin, 2019). The counttable of the data was generated using the summarize Overlaps function in R. Differentially expressed genes were detected using the DESEQ2 function to analyse the countable and applying a false discovery rate of 0.01 (adjusted p-values < 0.01). The gene lists were analysed using the Wilcoxon Signed Rank test in MapMan to identify significantly induced pathways.

### Results

### Example 1: DHA promotes root growth and embryonic crown root formation in rice seedlings

Three days after germination, rice seedlings were drenched with 1mL of AA (reduced ascorbic acid, 20 mM), DHA (20 mM), or ascorbate oxidase (AO, 20U/ml) or water as control. 5 days after this application, the root length (Fig. 1A), dry root weight (Fig. 1B) and number of embryonic crown roots (ECR; Fig. 1C) was significantly higher in DHA treated seedlings. AA treated seedlings had slightly shorter roots (Fig. 1A) and significantly fewer ECR (Fig. 1C) than control plants, and the seedlings generally looked more vigorous after DHA treatment. While AO also had some positive effects on root dry weight and ECR, no root length effects were seen for this compound.

### Example 2: DHA improves rice tolerance to root-knot nematode infection

14-days old rice plants were foliarly sprayed with AA (20 mM), AO (20 U/mL), DHA (20 mM) or water (H₂O) as a negative control (Ctrl). One day later, half of the plants were inoculated with 250 nematodes per plant, while the other half stayed uninfected. The root length of all plants was monitored at three different time points: 4 days, 8 days and 12 days after spraying (DAS). Under uninfected conditions (Fig. 2A left) only the DHA treated plants had significantly longer roots at 12 DAS. Under nematode-infected conditions, AO treated plants had slightly increased root length, while DHA treated plants had the most significant improved root length at both 8 DAS (7 days after nematode inoculation) and 12 DAS (11 days after nematode inoculation) (Fig. 2B).

### Example 3: Foliar spray with DHA protects rice against root-knot nematode infection

Rice plants were foliar sprayed with AA (20 mM), DHA (20 mM), or ascorbate oxidase (AO, 20U/ml), 24 h prior to nematode inoculation. We investigated the effect of these treatments on number of galls and number of nematodes at 12 dai. There were no significant differences in number of galls and total number of nematodes between the control and AA-sprayed plants (Fig. 3A & B), but a significantly lower number of galls (Fig. 3A) and lower number of nematodes (Fig. 3B) was observed in rice plants sprayed with AO or with DHA.

We also evaluated the effect of foliar application with these chemicals (AA, AO & DHA) on endogenous reduced AA and oxidized AA (=DHA) levels, 24h after their application. The amount of reduced AA was significantly increased in the shoots of AA sprayed plants (Figure 3C), while no changes in roots were observed (Fig. 3D). Upon foliar AO application, total levels of reduced and oxidized ascorbate were slightly decreased in shoots, while mainly DHA was accumulating in the roots of sprayed plants versus control plants (Fig. 3D). DHA sprayed shoots contained significantly higher amounts of DHA than control plants, in shoots, while the total ascorbate level is increased in the roots (Fig. 3C and 3D). These data show that DHA has a systemic effect on the plant. The results obtained with foliar applications demonstrate that externally applied DHA reduces rice root susceptibility to RKN.

### Example 4: Soil drench with DHA protects rice against root-knot nematode infection

In this experiment the same treatments as in example 3 were applied as soil drenching. Twelve days after root-knot nematode inoculation (*M. graminicola*), we observed no significant difference in number of galls and total number of nematodes between control and AO soil drenched rice plants (Fig. 4A & B). However, a significantly lower number of galls (Figure 4A) and lower number of nematodes (Fig 4B) were observed in rice plants soil drenched with AA or with DHA. These data show that the application of DHA reduces the number of galls and nematodes in rice plants. In combination with example 3, these results show that DHA can be applied as both soil drench and foliar spray to systemically protect the plant from nematode infection.

### Example 5: DHA activates systemic root defence against nematodes through the JA/ET pathway

To investigate whether the induction of a systemic induced defence in rice against root-knot nematodes works through activation of ethylene (ET) and jasmonic acid (JA), an infection experiment was carried out using foliar application of DHA. This treatment was done on the jasmonate signalling *Osjar1* mutant, and on wild-type Nipponbare (Nip) plants. Also, DHA was sprayed on wild-type Nipponbare in combination with JA biosynthesis inhibitor ammonium diethyldithiocarbamic acid (DIECA) or ET biosynthesis inhibitor aminooxy acetic acid (AoA) (Fig. 5B). Again, a significant reduction in number of galls (reduction of 50-70 %) was observed in wild-type plants sprayed with DHA when compared with the unsprayed wild-type plants. Asignificantly increased number of galls were observed in the *Osjar1* mutant and DIECA sprayed plants when compared with wild-type Nipponbare, confirming and extending results from Nahar *et al.* (2011), showing that JA is involved in defence against RKN in rice. However, only 25-30 % reduction was observed in *Osjar1* mutants sprayed with DHA, and similarly, only 20 % reduction was observed in plants sprayed with a combination of DIECA and DHA. Plants sprayed with ET-inhibitor AoA had significantly higher number of galls when compared with control plants. However, when AoA was combined with DHA, again only a 20 % reduction was seen (Fig. 5B). Collectively it can be concluded that DHA induced systemic defence against root-knot nematodes is partially dependent on activation of the JA and ET pathways.

### Example 6: DHA improves sugar beet root length and overall healthiness of young plants

Two-week old sugar beet plants were foliarly sprayed with AA (20 mM), AO (20 U/mL), DHA (20 mM) or water as a negative control (Ctrl). Seven days later, the length of root and shoot and the fresh root weight was measured. Results, shown in figure 6, reveal that AO and DHA treated plants had significantly longer roots. This demonstrates that ascorbate oxidation in the plants, by supply of DHA or AO treatment, enhances root growth. Although not statistically significant also shoot length and root weight was positively affected by both treatments (Fig. 6B & 6C). In general, the DHA treated plants looked more vigorous throughout the experiment.

### Example 7: Foliar spray with DHA protects sugar beet against beet cyst nematode infection

Three-weeks old sugar beet plants were foliarly sprayed with AA (20 mM), AO (20 U/mL), DHA (20 mM) or water as a negative control (Ctrl). One day later, the plants were inoculated with 250 *Heterodera schachtii* nematodes per plant. 3 days later, which corresponds to 4 days after spraying (DAS), the root and shoot parameters were evaluated. Results, shown in Figure 7, reveal a significantly increased root length (Fig. 7A), root weight (Fig. 7B) and shoot weight (Fig. 7D) in DHA treated plants. Shoot height was also positively influenced by this treatment although not statistically significant (Fig. 7C). None of the other treatments (AA or AO) had significant effects on these parameters.

The same plants were also evaluated at a later time point, namely 43 DAS, corresponding to 42 days after nematode inoculation. At this time point, the DHA treated plants still had significantly more fresh root weight (Fig. 8A) and a better developed root system than control plants, while other treatments had no significant effect. The number of cysts found on the DHA-treated plants was significantly lower in comparison with untreated plants (Fig. 8B). This confirms that DHA induces systemic defence against beet cyst nematode infection in sugar beet plants.

### Example 8: Induction of plant defence responses upon nematode infection in DHA-treated plants

Biochemical measurements of defence responses, more specifically levels of H₂0₂ and PAL-activity were investigated in 20 mM DHA-treated plants, which were either uninfected or infected with root-knot nematode *M. graminicola.* PAL-activity, which is an indication for activation of the phenylpropanoid pathway is strongly enhanced upon DHA treatment in both locally infected tissue-i.e. galls in comparison with uninfected root tips- as in systemic shoot tissues of infected versus uninfected plants, at 3 and 7 dpi (Figures 9 &10). H₂0₂, typically one of the earliest plant defence responses, is also induced in DHA-pretreated plants upon nematode infection at 1 dpi (Figure 11). These results indicate that the plant response for protection against nematode infection is potentiated by DHA treatment.

### Example 9: Induction of plant defence pathways in roots of rice plants after foliar DHA application

To confirm defence induction by DHA, gene expression analysis ('transcriptome analysis'; Figure 12) was done on roots of rice plants 1 day after foliar spraying with DHA (20mM) in comparison with mock-treated plants. Multiple pathways were found to be significantly (corrected p-value <0.01) activated in the roots of DHA-treated plants and the five most strongly induced pathway are shown in Table 1. DHA treatment induces expresion of genes involved in the phenylpropanoid pathway, which is responsible for production of multiple compounds involved in plant defence, such as salicylic acid, lignin and anthocyanins. This observation confirms the PAL activity measurements (Figure 9 & 10). Genes involved in production of jasmonate, ethylene and WRKY transcription factors, all well-known players in plant defence, are also induced in roots upon foliar DHA treatment.

**Table 1. Systemic gene expression profiling by RNA-sequencing on roots of 20 mM DHA-treated plants reveals induction of plant defence related processes. The top-5 significantly induced pathways and FDR-adjusted p-values are shown. DHA: dehydroascorbate**

| **Process/Function** | **Adjusted P-value** |
|---|---|
| Secondary metabolism.phenylpropanoids | 6,57×10-6 |
| Secondary metabolism.phenylpropanoids.lignin biosynthesis | 5,03×10-5 |
| Jasmonate metabolism | 4,09×10-3 |
| RNA.regulation of transcription.WRKY domain transcription factor family | 4,23×10-3 |
| Ethylene metabolism | 1,07×10-2 |

### References

Camacho-Cristóbal, JJ, Anzellotti D., Gonzales-Fontes A. 2002. Changes In Phenolic Metabolism of Tobacco Plants During Short-Term Boron Deficienc. Plant Physiology and Biochemistry 40, 997-1002.
Cheeseman J.M. 2006. Hydrogen peroxide concentrations in leaves under natural conditions. Journal of Experimental Botany 57, 2435-2444,
Dhankher OP, Foyer CHJP. 2018. Climate resilient crops for improving global food security and safety. Plant Cell & Environment 41, 877-884.
Fujiwara A, Shimura H, Masuta C, Sano S, Inukai TJJ. 2013. Exogenous ascorbic acid derivatives and dehydroascorbic acid are effective antiviral agents against Turnip mosaic virus in Brassica rapa. Journal of General Plant Pathology 79, 198-204.
Fujiwara A, Togawa S, Hikawa T, Matsuura H, Masuta C, Inukai T. 2016. Ascorbic acid accumulates as a defense response to Turnip mosaic virus in resistant Brassica rapa cultivars. Journal of experimental botany 67, 4391-4402.
Huang WK, Ji HL, Gheysen G, Kyndt T. 2016. Thiamine-induced priming against root-knot nematode infection in rice involves lignification and hydrogen peroxide generation. Molecular plant pathology 17, 614-624.
Jisha K, Puthur JT. 2016. Seed priming with BABA (β-amino butyric acid): a cost-effective method of abiotic stress tolerance in Vigna radiata (L.) Wilczek. Protoplasma 253, 277-289.
Jones JD, Dangl JLJN. 2006. The plant immune system. 444, 323.
Kammerhofer N, Radakovic Z, Regis J, Dobrev P, Vankova R, Grundler FM, Siddique S, Hofmann J, Wieczorek K. 2015. Role of stress-related hormones in plant defence during early infection of the cyst nematode Heterodera schachtii in Arabidopsis. New Phytologist 207, 778-789.
Kim SY, Volsky DJ. 2005. PAGE: Parametric analysis of gene set enrichment. Bmc Bioinformatics 6**.** Kka N, Rookes J, Cahill D. 2018. The influence of ascorbic acid on root growth and the root apical meristem in Arabidopsis thaliana. Plant Physiology and Biochemistry. 129: 323-330.
Kyndt T, Fernandez D, Gheysen G. 2014. Plant-parasitic nematode infections in rice: molecular and cellular insights. Annual review of phytopathology 52, 135-153.
Li X, Makavitskaya M, Samokhina V, Mackievic V, Navaselsky I, Hryvusevich P, Smolikova G, Medvedev S, Shabala S, Yu M, Demidchik V. 2018 Effects of exogenously-applied L-ascorbic acid on root expansive growth and viability of the border-like cells, Plant Signaling & Behavior, 13:9.
Moens M, Perry RN, Jones JT. 2018. Cyst nematodes-Life cycle and economic importance. Book chapter in: Cyst Nematodes, CABI, Wallingford, UK, 1-26.
Nahar K, Kyndt T, De Vleesschauwer D, Höfte M, Gheysen G. 2011. The jasmonate pathway is a key player in systemically induced defence against root knot nematodes in rice. Plant Physiology 157, 305-316.
Pavet V, Olmos E, Kiddle G, Mowla S, Kumar S, Antoniw J, Alvarez ME, Foyer CH. 2005. Ascorbic acid deficiency activates cell death and disease resistance responses in Arabidopsis. Plant Physiology 139, 1291-1303.
Perry RN, Moens M, Jones JT. 2018. Cyst Nematodes: CABI. April 2018, 488 Pages, 9781786390837
Sobczak M, Golinowski W. 2009. Structure of cyst nematode feeding sites. Cell biology of plant nematode parasitism: Springer, 153-187.
Singh RR, Chinnasri B, De Smet L, Haeck A, Demeestere K, Van Cutsem P, Van Aubel G, Gheysen G, Kyndt T. 2019. Systemic defense activation by COS-OGA in rice against root-knot nematodes depends on stimulation of the phenylpropanoid pathway. Plant physiology and biochemistry 142, 202-210.
Ueda Y. et al. Plant Physiology and Biochemistry, Volume 70, September 2013, Pages 418-423
Wyss U, Grundler FMW. 1992. Feeding behavior of sedentary plant parasitic nematodes. Neth. J. PI. Pathology 98, 65-173.
Zhan L-P, Peng D-L, Wang X-L, Kong L-A, Peng H, Liu S-M, Liu Y, Huang W-K. 2018. Priming effect of root-applied silicon on the enhancement of induced resistance to the root-knot nematode Meloidogyne graminicola in rice. BMC Plant biology 18, 50.

## Claims

1. Use of a compound of the Formula II, or a stereoisomer, tautomer, hydrate, salt, ester, solvate, and/or complex thereof, wherein the compound of Formula II is: 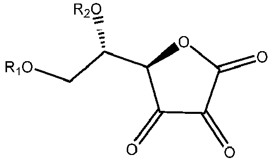 wherein R1 and R2 each independently represents a hydrogen atom, -SO3H, -PO3H2, a glycosyl group, or -COX wherein X represents an unsubstituted or substituted C1 to C30 alkyl group or an unsubstituted or substituted C2 to C30 alkenyl group, for protecting plants against infection with nematodes.

2. Use according to claim 1, wherein the compound is dehydroascorbic acid (DHA) or a stereoisomer, tautomer, hydrate, ester or solvate thereof.

3. Use according to claims 1 or 2, wherein the nematode is a root parasitic nematode, in particular a root-knot nematode and/or cyst-nematode.

4. Use according to claim 3, wherein the root-knot nematode is selected from the group consisting of: Meloidogyne graminicola, M. javanica, M. incognita, M. arenaria, M. chitwoodi, M. artiellia, M. fallax, M. hapla, M. microtyla, M. partityla, M. panyuensis, M. naasi, M. exigua, M. enterolobii and M. paranaensis; and/or wherein the cyst nematode is selected from the group consisting of Heterodera schachtii, H. avenae, H. glycines, H. sacchari, H. carotae, Globodera pallida and G. rostochiensis.

5. Use according to any one of claims 1 to 4, wherein the plant is a monocot, in particular a grass, more in particular rice.

6. Use according to any one of claims 1 to 4, wherein the plant is a dicot, in particular a plant from the family Amaranthaeceae, more in particular sugar-beet.

7. Use according to any one of claims 1 to 6, wherein the compound is applied to the leaves of the plant, as a seed coating or as a soil drench.

8. Use according to any one of claims 1 to 6, wherein the compound is applied to the leaves of the plant by spraying.

9. Use according to any one of claim 1 to 8, wherein the compound is applied to the plant as a priming agent.

10. Use according to any one of claims 1 to 9, wherein the compound is comprised in an agrochemical composition further comprising an agricultural and/or horticultural acceptable excipient.

11. Use of a compound of the Formula II, or a stereoisomer, tautomer, hydrate, salt, ester, solvate, and/or complex thereof, for stimulating root growth in infected plants, in particular nematode-infected plants, wherein the compound of Formula II is: 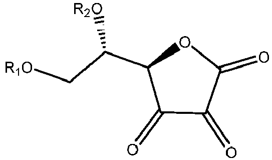 wherein R1 and R2 each independently represents a hydrogen atom, -SO3H, -PO3H2, a glycosyl group, or -COX wherein X represents an unsubstituted or substituted C1 to C30 alkyl group or an unsubstituted or substituted C2 to C30 alkenyl group.

12. Use according to claim 11, wherein the compound is dehydroascorbic acid (DHA), or a stereoisomer, tautomer, hydrate, ester, solvate, and/or complex thereof.

13. Use of a compound of the Formula II, or a stereoisomer, tautomer, hydrate, salt, ester, solvate, and/or complex thereof, for stimulating the immune defence of a plant against nematode infection, in particular against root-parasitic nematodes, wherein the compound of Formula II is: 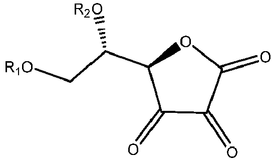 wherein R1 and R2 each independently represents a hydrogen atom, -SO3H, -PO3H2, a glycosyl group, or -COX wherein X represents an unsubstituted or substituted C1 to C30 alkyl group or an unsubstituted or substituted C2 to C30 alkenyl group.

14. Use according to claim 13, wherein the compound is dehydroascorbic acid (DHA), or a stereoisomer, tautomer, hydrate, ester, solvate, and/or complex thereof.

## Patentansprüche

1. Verwendung einer Verbindung der Formel II oder eines Stereoisomers, Tautomers, Hydrats, Salzes, Esters, Solvats und/oder Komplexes davon, wobei die Verbindung der Formel II die folgende ist: 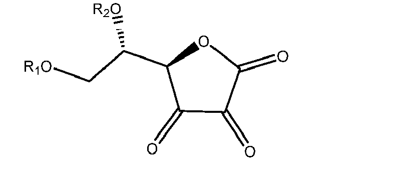 wobei R1 und R2 jeweils unabhängig für ein Wasserstoffatom, -SO3H, -PO3H2, eine Glycosyl-Gruppe oder -COX stehen, wobei X für eine unsubstituierte oder substituierte C1- bis C30-Alkyl-Gruppe oder eine unsubstituierte oder substituierte C2- bis C30-AlkenylGruppe stehen, zum Schutz von Pflanzen vor Infektion mit Nematoden.

2. Verwendung nach Anspruch 1, wobei die Verbindung Dehydroascorbinsäre (DHA) oder ein Stereoisomer, Tautomer, Hydrat, Ester oder Solvat davon ist.

3. Verwendung nach Anspruch 1 oder 2, wobei der Nematode ein wurzelparasitischer Nematode, insbesondere ein Wurzelgallennnematode und/oder Zystennematode ist.

4. Verwendung nach Anspruch 3, wobei der Wurzelgallennnematode ausgewählt ist aus der Gruppe bestehend aus: Meloidogyne graminicola, M. javanica, M. incognita, M. arenaria, M. chitwoodi, M. artiellia, M. fallax, M. hapla, M. microtyla, M. partityla, M. panyuensis, M. naasi, M. exigua, M. enterolobii und M. paranaensis; und/oder wobei der Zystennematode ausgewählt ist aus der Gruppe bestehend aus Heterodera schachtii, H. avenae, H. glycines, H. sacchari, H. carotae, Globodera pallida und G. rostochiensis.

5. Verwendung nach einem der Ansprüche 1 bis 4, wobei die Pflanze eine einkeimblättrige Pflanze ist, insbesondere ein Gras, ganz besonders Reis.

6. Verwendung nach einem der Ansprüche 1 bis 4, wobei die Pflanze eine zweikeimblättrige Pflanze ist, insbesondere eine Pflanze aus der Familie Amaranthaeceae, ganz besonders Zuckerrübe.

7. Verwendung nach einem der Ansprüche 1 bis 6, wobei die Verbindung auf die Blätter der Pflanze, als Samenbeschichtung oder als Bodentränkung aufgebracht wird.

8. Verwendung nach einem der Ansprüche 1 bis 6, wobei die Verbindung durch Aufsprühen auf die Blätter der Pflanze aufgebracht wird.

9. Verwendung nach einem der Ansprüche 1 bis 8, wobei die Verbindung als Vorbereitungsmittel auf die Pflanze aufgebracht wird.

10. Verwendung nach einem der Ansprüche 1 bis 9, wobei die Verbindung in einer agrochemischen Zusammensetzung besteht, die ferner einen landwirtschaftlich und/oder gärtnerisch annehmbaren Hilfsstoff umfasst.

11. Verwendung einer Verbindung der Formel II oder eines Stereoisomers, Tautomers, Hydrats, Salzes, Esters, Solvats und/oder Komplexes davon, zum Fördern ds Wurzelwachstums bei infizierten Pflanzen, insbesondere mit Nematoden infizierten Pflanzen, wobei die Verbindung der Formel II folgende ist: 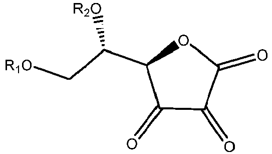 wobei R1 und R2 jeweils unabhängig für ein Wasserstoffatom, -SO3H, -PO3H2, eine Glycosyl-Gruppe oder -COX stehen, wobei X für eine unsubstituierte oder substituierte C1- bis C30-Alkyl-Gruppe oder eine unsubstituierte oder substituierte C2- bis C30-AlkenylGruppe steht.

12. Verwendung nach Anspruch 11, wobei die Verbindung Dehydroascorbinsäure (DHA) oder ein Stereoisomer, Tautomer, Hydrat, Ester, Solvat und/oder Komplex davon ist.

13. Verwendung einer Verbindung der Formel II oder eines Stereoisomers, Tautomers, Hydrats, Salzes, Esters, Solvats und/oder Komplexes davon, zum Fördern der Immunabwehr einer Pflanze gegen Nematodeninfektion, insbesondere gegen wurzelparasitische Nematoden, wobei die Verbindung der Formel II folgende ist: 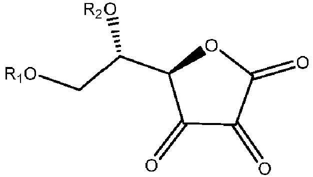 wobei R1 und R2 jeweils unabhängig für ein Wasserstoffatom, -SO3H, -PO3H2, eine Glycosyl-Gruppe oder -COX stehen, wobei X für eine unsubstituierte oder substituierte C1- bis C30-Alkyl-Gruppe oder eine unsubstituierte oder substituierte C2- bis C30-AlkenylGruppe steht.

14. Verwendung nach Anspruch 13, wobei die Verbindung Dehydroascorbinsäure (DHA) oder ein Stereoisomer, Tautomer, Hydrat, Ester, Solvat und/oder Komplex davon ist.

## Revendications

1. Utilisation d'un composé de la formule II ou d'un stéréoisomère, d'une forme tautomère, d'un hydrate, d'un sel, d'un ester, d'un solvate et/ou d'un complexe correspondant(e), le composé de formule II étant : 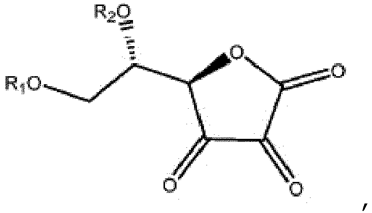 R1 et R2 représentant chacun indépendamment un atome d'hydrogène, -SO3H, -PO3H2, un groupe glycosyle ou -COX, X représentant un groupe alkyle non substitué ou substitué en C1 à C30, ou un groupe alcényle non substitué ou substitué en C2 à C30, pour la protection de végétaux contre une infection par des nématodes.

2. Utilisation selon la revendication 1, le composé étant l'acide déshydroascorbique (DHA) ou un stéréoisomère, une forme tautomère, un hydrate, un ester ou un solvate correspondant(e).

3. Utilisation selon la revendication 1 ou 2, le nématode étant un nématode parasitaire de racines, en particulier un nématode de la nodosité des racines et/ou un nématode à kyste.

4. Utilisation selon la revendication 3, le nématode de la nodosité des racines étant choisi dans le groupe constitué par Meloidogyne graminicola, M. javanica, M. incognita, M. arenaria, M. chitwoodi, M. artiellia, M. fallax, M. hapla, M. microtyla, M. partityla, M. panyuensis, M. naasi, M. exigua, M. enterolobii et M. paranaensis ; et/ou le nématode à kyste étant choisi dans le groupe constitué par Heterodera schachtii, H. avenae, H. glycines, H. sacchari, H. carotae, Globodera pallida et G. rostochiensis.

5. Utilisation selon l'une quelconque des revendications 1 à 4, le végétal étant un monocotylédone, en particulier une herbe, plus particulièrement le riz.

6. Utilisation selon l'une quelconque des revendications 1 à 4, le végétal étant dicotylédone, en particulier un végétal de la famille des Amaranthaeceae, plus particulièrement la betterave à sucre.

7. Utilisation selon l'une quelconque des revendications 1 à 6, le composé étant appliqué sur les feuilles du végétal, en tant qu'un revêtement de graine ou en arrosage abondant du sol.

8. Utilisation selon l'une quelconque des revendications 1 à 6, le composé étant appliqué sur les feuilles du végétal par pulvérisation.

9. Utilisation selon l'une quelconque des revendications 1 à 8, le composé étant appliqué sur le végétal en tant qu'un agent d'amorçage.

10. Utilisation selon l'une quelconque des revendications 1 à 9, le composé étant compris dans une composition agrochimique comprenant en outre un excipient acceptable sur le plan agricole et/ou sur le plan horticole.

11. Utilisation d'un composé de la formule II ou d'un stéréoisomère, d'une forme tautomère, d'un hydrate, d'un sel, d'un ester, d'un solvate et/ou d'un complexe correspondant(e), pour la stimulation de la croissance des racines chez des végétaux infectés, en particulier des végétaux infectés par des nématodes, le composé de formule II étant : 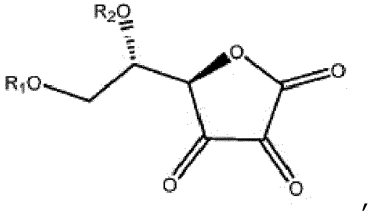 R1 et R2 représentant chacun indépendamment un atome d'hydrogène, -SO3H, -PO3H2, un groupe glycosyle ou -COX, X représentant un groupe alkyle non substitué ou substitué en C1 à C30, ou un groupe alcényle non substitué ou substitué en C2 à C30.

12. Utilisation selon la revendication 11, le composé étant l'acide désydroascorbique (DHA) ou un stéréoisomère, une forme tautomère, un hydrate, un ester, un solvate et/ou un complexe correspondant(e).

13. Utilisation d'un composé de la formule II ou d'un stéréoisomère, d'une forme tautomère, d'un hydrate, d'un sel, d'un ester, d'un solvate et/ou d'un complexe correspondant(e), pour la stimulation de la défense immunitaire d'un végétal contre une infection par des nématodes, en particulier contre des nématodes parasitaires de racines, le composé de formule II étant 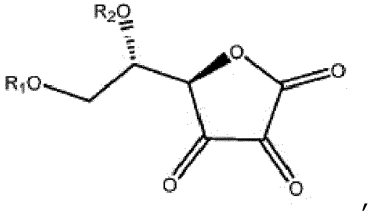 R1 et R2 représentant chacun indépendamment un atome d'hydrogène, -SO3H, -PO3H2, un groupe glycosyle ou -COX, X représentant un groupe alkyle non substitué ou substitué en C1 à C30, ou un groupe alcényle non substitué ou substitué en C2 à C30.

14. Utilisation selon la revendication 13, le composé étant l'acide désydroascorbique (DHA) ou un stéréoisomère, une forme tautomère, un hydrate, un ester, un solvate et/ou un complexe correspondant(e).
